# EUROPÄISCHE PATENTANMELDUNG

(11) **EP 0 675 032 A1**
(43) Veröffentlichungstag der Anmeldung: **04.10.1995**
(21) Anmeldenummer: 95103663.1
(22) Anmeldetag: 14.03.1995
(51) Int. Cl.: B61L 1/16, B61L 1/06, G01L 5/00

(54) **Radsensor für Gleise**

(30) Priorität: 16.03.1994 DE 4408923
(71) Anmelder: GTM GASSMANN THEISS MESSTECHNIK GMBH, D-64342 Seeheim-Jugenheim (DE)
(72) Erfinder: Hose von Wolfframsdorff, Joachim, 64342 SEEHEIM-Jungenheim (DE)
(74) Vertreter: Katscher, Helmut, Dipl.-Ing.

(57) **Zusammenfassung**

Ein Radsensor für Gleise weist einen in einer Querbohrung (6) eines Schienenstücks (1) angeordneten Verformungsaufnehmer auf, dessen hohlzylindrischer Verformungskörper (7) die Bohrungsinnenwand nur an deren oberem und unterem Scheitel berührt. Der mit Dehnungsmeßstreifen bestückte Verformungsaufnehmer nutzt den Krafteinleitungseffekt, den ein Rad (3) erzeugt, wenn es über das Schienenstück (1) rollt oder auf ihm steht.

## Beschreibung

Die Erfindung betrifft einen Radsensor für Gleise, mit einem an einem Schienenstück angebrachten, die Schienenverformung bei Überfahrt eines Rades erfassenden Verformungsaufnehmer, der mit einer Auswerteschaltung verbunden ist.

In der Eisenbahn-Betriebstechnik, aber auch allgemein in der Gleisfördertechnik werden für unterschiedliche Überwachungs- und Steuerungszwecke Informationen darüber benötigt, ob und wieviele Räder einen bestimmten Abschnitt der Gleise passieren. Anwendungsgebiete sind beispielsweise die Gleisfreimeldetechnik, die Rangiertechnik und weitere eisenbahntechnischen Gebiete, auf denen es notwendig ist, das Passieren eines Rades zu erkennen oder Räder und damit Achsen zu zählen.

Hierzu ist es bekannt, mechanische oder induktive Schalter vorzusehen, die vom Spurkranz des Rades betätigt werden und einen Signalstromkreis schalten. Der erforderliche Bauaufwand ist verhältnismäßig hoch; außerdem sind diese Schalter empfindlich gegen Störungen oder Beschädigungen.

Ein Radsensor der eingangs genannten Gattung umfaßt eine an der Unterseite des Schienenstücks angebrachte ölgefüllte Kammer, in der sich der Öldruck durch die von einem Rad verursachte Durchbiegung des Schienenstücks ändert. Ein öldruckbetätigter Schalter schaltet einen Signalstromkreis. Diese Radsensoren arbeiten jedoch nicht zuverlässig genug, weil die hierbei erfaßte Schienendurchbiegung nicht nur von den jeweils genau über dem Radsensor befindlichen Rad, sondern auch von vorauslaufenden und nachlaufenden Rädern und von der Schienenlagerung beeinflußt wird. Außerdem ist die Anbringung der ölgefüllten Kammer am Schienenstück aufwendig und störanfällig.

Bei Radlastwaagen für Schienenfahrzeuge ist es bekannt (DE 0 099 001 A2), in Höhe der neutralen Faser am Steg eines Schienenstücks einen Dehnungsmeßstreifen mit senkrechter Meßrichtung anzubringen, der die senkrechte Verformung des Schienenstücks unter der Radlast mißt und ein der Last entsprechendes Meßsignal liefert. Diese Anordnung ist jedoch zur Verwendung als Radsensor ebenfalls nicht geeignet, weil das Meßsignal des am Steg des Schienenstücks angebrachten Dehnungsmeßstreifens durch die Schienendurchbiegung, die Schienenlagerung und durch die jeweils vorauslaufenden und nachlaufenden Räder beeinflußt wird. Außerdem ist die Anbringung von Dehnungsmeßstreifen an Außenflächen des Schienenstücks in der Praxis schwierig, weil keine bearbeitete Fläche zur Anbringung der Dehnungsmeßstreifen zur Verfügung steht und weil unter Berücksichtigung der rauhen Betriebsbedingungen ein wirksamer Schutz der Dehnungsemßstreifen gegen Umgebungseinflüsse und Beschädigungen vorgesehen werden müßte. Nach den üblichen Bahnbetriebsvorschriften ist aber eine Bearbeitung der Stegseitenfläche (außer durch Bohren) und die Anbringung einer über das Schienenprofil vorstehenden Schutzabdeckung nicht zulässig.

Deshalb ist bei einer anderen bekannten Radlastwaage (DE 36 17 085 C2) vorgesehen, in eine Querbohrung des Schienenstegs eine zylindrische Hülse einzusetzen, die an einem inneren Steg einen Dehnungsmeßstreifen trägt. Die Hülse liegt mit einem umlaufenden Wulst an der Innenwand der Querbohrung an. Auch diese Anordnung wäre als Radsensor für den eingangs beschriebenen Einsatzbereich nicht geeignet, weil auch die durch Schienendurchbiegungen, durch die Schienenlagerung und durch die Einflüsse vorauslaufender oder nachlaufender Räder verursachten Schienenverformungen die Messung beeinflussen.

Aufgabe der Erfindung ist es daher, einen Radsensor der eingangs genannten Gattung so auszubilden, daß er unabhängig von der Schienendurchbiegung, der Schienenlagerung und voraus- und nachlaufenden Rädern zuverlässig die das Schienenstück passierenden Räder dedektiert.

Diese Aufgabe wird erfindungsgemäß dadurch gelöst, daß der Verformungsaufnehmer in einer mindestens angenähert in Höhe der neutralen Faser liegenden Querbohrung des Schienenstücks angeordnet ist und einen Verformungskörper aufweist, der die Bohrungsinnenwand nur an deren oberem und unterem Scheitel berührt, und daß am Verformungskörper Dehnungsmeßstreifen angebracht sind, die mit der Auswerteschaltung verbunden sind.

Da der Verformungsaufnehmer das Schienenstück nur am oberen und unteren Scheitel der Querbohrung berührt, werden nur senkrechte Verformungen des Schienenstück, die durch die senkrecht wirkende Radlast verursacht werden, erfaßt. Alle anderen Verformungen des Schienenstücks wirken sich auf den Verformungsaufnehmer nicht aus. Durch die gewählte Abstützung des Verformungsaufnehmers nur am oberen und unteren Scheitel der Querbohrung wird nur die vertikale, unmittelbar durch den Raddruck erzeugte, örtlich eng begrenzte Kraftkomponente erfaßt.

Durch die Anordnung in der Querbohrung ist der Verformungsaufnehmer gegenüber äußeren Einflüssen und insbesondere Beschädigungen wirksam und einfach zu schützen, nämlich beispielsweise durch Verschlußdeckel, mit denen die Querbohrung beiderseits verschlossen wird.

Da die Dehnungsmeßstreifen nicht unmittelbar am Schienenstück, sondern an einem gesonderten Verformungskörper angebracht sind, können die Dehnungsmeßstreifen schon bei der Herstellung des Verformungsaufnehmers angebracht werden. Am Schienenstück muß nur eine Querbohrung vorgesehen werden.

Der erfindungsgemäße Verformungsaufnehmer kann mit geringen Abmessungen ausgeführt werden, so daß am Schienenstück eine Querbohrung von nur geringem Durchmesser erforderlich ist. Querbohrungen dieser Abmessungen sind nach den Vorschriften des Eisenbahnbaus ohne weiteres zulässig. Das Gewicht des Verformungsaufnehmers ist gering; er kann leicht bei allen Schienentypen montiert werden. Im eingebauten Zustand der ist Verformungsaufnehmer gut geschützt, wobei eine hermetisch dichte Kapselung mit geringem Aufwand möglich ist.

Wegen der geringen Abmessungen des Verformungsaufnehmers ist es möglich, mehrere Radsensoren eng beieinander anzuordnen und so miteinander zu verschalten, daß auch die Fahrtrichtung und/oder die Fahrtgeschwindigkeit erkannt werden können und eine Fehlererkennung in der elektrischen Auswerteschaltung ermöglicht wird.

Gemäß einer bevorzugten Ausführungsform des Erfindungsgedankens ist vorgesehen, daß der Verformungskörper ein konzentrisch in der Querbohrung angeordneter Hohlzylinder ist, der an seiner oberen und unteren Mantellinie jeweils eine achsparallele, an der Bohrungsinnenwand anliegende Krafteinleitungsleiste trägt. In dieser Gestaltung ist der Verformungskörper einfach herzustellen und leicht zu montieren. Die Dehnungsmeßstreifen können vorzugsweise an der Innenwand des Hohlzylinders angebracht werden, wo sie besonders gut geschützt sind. Durch die hohlzylindrische Form des Verformungskörpers wird der in der Querbohrung zur Verfügung stehende Platz optimal ausgenutzt, so daß trotz geringster Abmessungen ausreichend große Verformungswege zur Verfügung stehen.

Nachfolgend wird ein Ausführungsbeispiel der Erfindung näher erläutert, das in der Zeichnung dargestellt ist. Es zeigt:
Fig. 1 in einer vereinfachten Seitenansicht ein Schienenstück mit einem Radsensor,
Fig. 2 in räumlicher Darstellungsweise den Verformungskörper des Radsensors mit daran angebrachten Dehnungsmeßstreifen und
Fig. 3 ein Schaltbild der Auswerteschaltung.

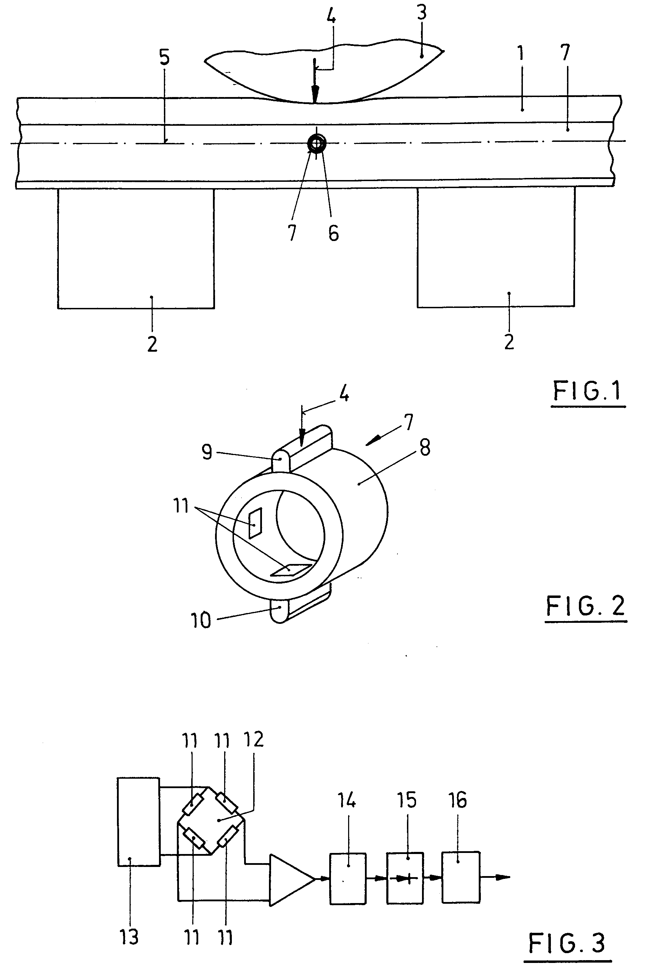

Ein Schienenstück 1 ruht auf zwei Schwellen 2. Ein das Schienenstück 1 passierendes, in Fig. 1 nur teilweise angedeutetes Rad 3 soll bei Überfahrt erfaßt werden. Das Rad 3 übt in vertikaler Richtung eine in Fig. 1 mit einem Pfeil 4 angedeutete Kraft aus, die zu einer übertrieben dargestellten Verformung, nämlich einer Zusammendrückung des Schienenstücks 1 unmittelbar unter dem Rad 3 führt. Weitere durch das Rad 3 verursachte Verformungen, insbesondere eine Durchbiegung des Schienenstücks 1 bleiben hierbei unberücksichtigt.

In der in Fig. 1 mit einer unterbrochenen Linie angedeuteten neutralen Faser 5 des Schienenstücks 1 ist vorzugsweise in der Mitte zwischen den beiden Schwellen 2 eine Querbohrung 6 im Steg 7 des Schienenstücks 1 ausgeführt. In der Querbohrung 6 ist ein Verformungsaufnehmer 7 angeordnet, der in Einzelheiten in Fig. 2 dargestellt ist. Der Verformungsaufnehmer 7 weist einen Verformungskörper 8 auf, der als Hohlzylinder ausgeführt ist und an seiner oberen und unteren Mantellinie jeweils eine achsparallele Krafteinleitungsleiste 9 bzw. 10 trägt.

Die beiden Krafteinleitungsleisten 9, 10 liegen jeweils an der Bohrungsinnenwand der Querbohrung 6 an, so daß der Verformungskörper 7 die Bohrungsinnenwand der Querbohrung 6 nur an deren oberem und unterem Scheitel berührt.

An der Innenwand des hohlzylindrischen Verformungskörpers 8 sind vier Dehnungsmeßstreifen 11 jeweils einander gegenüberliegend angeordnet. In Fig. 2 sind hiervon nur zwei Dehnungsmeßstreifen 11 erkennbar.

Jeweils ein Dehnungsmeßstreifen 11 ist an der Oberseite und an der Unterseite der Innenbohrung des Verformungskörpers 8 angebracht, und jeweils ein weiterer Dehnungsmeßstreifen 11 ist an den beiden Seitenflächen der Bohrungsinnenwand angebracht. Die Meßrichtung der Dehnungsmeßstreifen 11 verläuft jeweils in Umfangsrichtung.

Der Verformungsaufnehmer 7 ist in die Querbohrung 6 eingesetzt, die anschließend an beiden Enden hermetisch verschlossen wird. Die Dehnungsmeßstreifen 11 sind zu einer Wheatstonschen Brücke 12 verschaltet, deren Ausgangssignal in einer Auswerteschaltung (Fig. 3) ausgewertet wird. Hierzu wird die Wheatstonsche Brücke 12 von einem Trägerfrequenzgenerator 13 mit einer Trägerfrequenz gespeist, die weit oberhalb der Störfrequenzen liegt, die im Eisenbahnbetrieb durch den Bahnstrom verursacht werden. In einem Bandpaßfilter 14 wird das Nutzsignalband aus der modulierten Trägerfrequenz herausgefiltert und in einem Gleichrichter 15 gleichgerichtet. Über ein Tiefpaßfilter 16 wird das Nutzsignal gewonnen.

Der Radsensor nutzt den Krafteinleitungseffekt, den das Rad 3 erzeugt, wenn es über das Schienenstück 1 rollt oder darauf steht, indem er die Verformung des Schienenstücks 1 in Richtung der Gewichtskraft 4 an der Stelle der Schiene erfaßt, an der das Rad die Schiene berührt. Die beiden Leisten 9, 10 liegen in der zu erfassenden Verformungsrichtung. Mittels der Auswerteschaltung kann die Anwesenheit des Rades 3, die Überfahrt des Rades 3 und damit auch die Anzahl der Räder eines Zugverbandes bestimmt werden.

## Patentansprüche

1. Radsensor für Gleise, mit einem an einem Schienenstück angebrachten, die Schienenverformung bei Überfahrt eines Rades erfassenden Verformungsaufnehmer, der mit einer Auswerteschaltung verbunden ist, dadurch gekennzeichnet, daß der Verformungsaufnehmer in einer mindestens angenähert in Höhe der neutralen Faser (5) liegenden Querbohrung (6) des Schienenstücks (1) angeordnet ist und einen Verformungskörper (7) aufweist, der die Bohrungsinnenwand nur an deren oberem und unterem Scheitel berührt, und daß am Verformungskörper (8) Dehnungsmeßstreifen (11) angebracht sind, die mit der Auswerteschaltung verbunden sind.

2. Radsensor nach Anspruch 1, dadurch gekennzeichnet, daß der Verformungskörper (8) ein konzentrisch in der Querbohrung (6) angeordneter Hohlzylinder ist, der an seiner oberen und unteren Mantellinie jeweils eine achsparallele, an der Bohrungsinnenwand anliegende Krafteinleitungsleiste (9) trägt.

3. Radsensor nach Anspruch 2, dadurch gekennzeichnet, daß die Dehungsmeßstreifen (11) an der Innenrand des Hohlzylinders angebracht sind.
